# EUROPEAN PATENT SPECIFICATION

(11) **EP 3 960 596 B1**
(45) Date of publication and mention of the grant of the patent: **15.05.2024**
(21) Application number: 20794804.3
(22) Date of filing: 19.03.2020
(51) Int. Cl.: B62J 45/00, B62H 1/02, B62J 45/42, B62J 45/413

(54) **SIDE STAND STRUCTURE**
SEITENSTÄNDERSTRUKTUR
STRUCTURE DE SUPPORT LATÉRAL

(30) Priority: 26.04.2019 JP 2019086704
(43) Date of publication of application: 02.03.2022
(73) Proprietor: HONDA MOTOR CO., LTD., Minato-ku Tokyo 107-8556 (JP)
(72) Inventor: NAKADA Naoki, Tokyo 107-8556 (JP)
(74) Representative: Weickmann & Weickmann PartmbB
(86) International application number: PCT/JP2020/012448
(87) International publication number: WO 2020/217803

(56) References cited:
- EP-A1- 0 820 919
- WO-A1-2018/123404
- WO-A1-2018/123450
- CN-U- 201 856 836
- JP-A- H01 254 478
- JP-A- 2007 210 596
- JP-A- 2013 246 973
- JP-A- 2014 241 223
- JP-A- 2019 059 318
- US-A- 4 883 284
- US-A1- 2017 151 992
- Scotch Joe: "Side stand switch", , 8 June 2016 (2016-06-08), pages 1-1, XP055919250, Retrieved from the Internet: URL:https://www.ducatiforum.co.uk/threads/ side-stand-switch-st4.43607/ [retrieved on 2022-05-09]

## Description

### [Technical Field]

The present invention relates to a saddle ridding type vehicle.

### [Background Art]

Conventionally, the following configuration is known in a side stand structure of a motorcycle. This configuration determines whether a side stand is in a retracted position at which it is flipped up rearward or in a standing position (a usage position) at which it extends downward and supports a vehicle body. For this reason, a stand switch for detecting a rotation position of the side stand is attached in the vicinity of a rotation shaft (see, for example, Japanese Patent No. JP 4771420 B2).

US 4 883 284 A shows a vehicle according to the preamble of claim 1 with a projection portion rather than a recessed portion.

### [Summary of Invention]

### [Technical Problem]

Incidentally, since the side stand is supported in a state in which the vehicle body is inclined, the above-mentioned conventional technique has the following problems. That is, a stand bracket or the like that rotatably supports the side stand protrudes downward from a lower part of the vehicle body and outward in a vehicle width direction. For this reason, there are the following risks in a case in which the vehicle body is largely banked during cornering or in a case in which unevenness of a road surface is passed over. That is, there is a risk that peripheral components such as the stand bracket will unintentionally touch the ground. For this reason, further compactness around the side stand is desired.

Therefore, the present invention provides a side stand structure that can be made compact around a side stand.

### [Solution to Problem]

As solutions for the above problems, the present invention provides a saddle riding type vehicle according to claim 1.

According to the invention a saddle ridding type vehicle includes a side stand (20) rotatably supported by a vehicle body (11) and a stand switch (40) configured to detect a rotational position of the side stand (20), and includes a rotor (41) and a case (42), in which the side stand structure includes a rotational positioning portion (45) configured to position the stand switch (40) in a rotation direction of the side stand (20) and a connector portion (46) configured to connect wiring (H) to the stand switch (40), a first straight line (T1) connecting an axial center (p1) of a rotation shaft (35) of the side stand (20) to a positioning center (p2) of the rotational positioning portion (45) in a side view of a vehicle extends from the rotation shaft (35) side to the rotational positioning portion (45) side in one of forward and rearward directions of a longitudinal direction of the vehicle, and a second straight line (T2) in a wiring attachment and detachment direction of the connector portion (46) in the side view of the vehicle extends from the rotation shaft (35) side to the connector portion (46) side in the other of the forward and rearward directions of the longitudinal direction of the vehicle.

A second aspect of the present invention is that, in the first aspect described above, the first straight line (T1) in the side view of the vehicle extends from the rotation shaft (35) side to the rotational positioning portion (45) side in the forward direction of the longitudinal direction of the vehicle, and the second straight line (T2) in the side view of the vehicle extends from the rotation shaft (35) side to the connector portion (46) side in the rearward direction of the longitudinal direction of the vehicle.

A third aspect of the present invention is that, in the second aspect described above, the side stand (20) includes a pivot portion (22) rotatably connected to the vehicle body (11), and, in an axial direction of the rotation shaft (35), an inner side surface (46d) of the connector portion (46) on an inner side in a vehicle width direction is disposed to be separated outward in the vehicle width direction from an outer side surface (22d) of the pivot portion (22) on an outer side in the vehicle width direction.

According to the invention, in the side view of the vehicle, the rotational positioning portion (45) is disposed in front of and above the rotation shaft (35), and the connector portion (46) is disposed above and behind the rotation shaft (35), the wiring (H) is attachable to and detachable from the connector portion (46) along an axis (C3) that rises rearward, and when a straight line connecting the axial center (p1) of the rotation shaft (35) to an axial center (p2) of a positioning pin (34) held by the rotational positioning portion (45) on the vehicle body (11) side in the side view of the vehicle is defined as the first straight line (T1) and a straight line along the axis (C3) of the connector portion (46) in the side view of the vehicle is defined as the second straight line (T2), a rearward inclination angle (θ2) of the second straight line (T2) with respect to a vertical line (T3) passing through the axial center (p1) of the rotation shaft (35) in the side view of the vehicle is set to be smaller than a forward inclination angle (θ1) of the first straight line (T1) with respect to the vertical line (T3).

According to the invention, a stand bracket (30) configured to rotatably support the side stand (20) and a vehicle body frame member (14) configured to fix the stand bracket (30) are provided on the vehicle body (11) side, and the vehicle body frame member (14) includes a recessed portion (18a) that overlaps at least a part of the connector portion (46) in the side view of the vehicle.

A sixth aspect of the present invention is that, in any one of the first to fourth aspects described above, the connector portion (46) includes a lock portion (46a) configured to lock the connector portion (46) in a coupled state, and an unlock operation portion (46b) configured to perform an unlock operation of the lock portion (46a), and the unlock operation portion (46b) is disposed on an inner side of the connector portion (46) in the vehicle width direction.

### [Advantageous Effects of Invention]

According to the first aspect, in the side view of the vehicle, the first straight line extending from the rotation shaft side to the rotational positioning portion side extends in one of the forward and rearward directions of the longitudinal direction of the vehicle. In the side view of the vehicle, the second straight line extending from the rotation shaft side to the connector portion side extends in the other of the forward and rearward directions of the longitudinal direction of the vehicle. As a result, the rotational positioning portion and the connector portion of the side stand are disposed to be distributed in front of and behind the rotation shaft of the side stand in the longitudinal direction of the vehicle, and thus the following effects are obtained. As compared with a case in which both the rotational positioning portion and the connector portion protruding toward an outer peripheral side of the stand switch are unilaterally disposed on one side of the rotation shaft in the longitudinal direction of the vehicle, the stand switch can be disposed closer to the vehicle body in the vehicle width direction and a vertical direction. For this reason, surroundings of the side stand can be made compact, and unintended grounding of the side stand can be easily avoided by moving the side stand upward.

According to the second aspect, in the side view of the vehicle, the first straight line extends forward in the vehicle, and the second straight line extends rearward in the vehicle. As a result, since the rotational positioning portion is disposed in front of the rotation shaft, and the connector portion is disposed behind the rotation shaft, the positioning pin or the like held by the rotational positioning portion on the vehicle body side is disposed in front of the rotation shaft. Normally, the side stand rotates between a usage position in which it extends downward from the rotation shaft and a retracted position in which it extends rearward. For this reason, by disposing the rotational positioning portion in front of the rotation shaft, the positioning pin or the like is retracted from a rotation range of the side stand. As a result, the rotational positioning portion and the connector portion can be disposed to be distributed in the longitudinal direction of the vehicle without obstructing the rotation range of the side stand. Further, since the connector portion that is an electrical component is disposed unilaterally rearward, it is possible to improve waterproofness and dust-proofness of the connector portion.

According to the third aspect, since the connector portion is disposed to be separated from the pivot portion outward in the vehicle width direction, it is possible to reliably prevent the side stand and the connector portion from interfering with each other when the side stand rotates.

According to the invention, since the rearward inclination angle of the second straight line on the connector portion side is set to be smaller than the forward inclination angle of the first straight line on the rotational positioning portion side (that is, more upright), the wiring extending from the connector portion can be easily extended upward (on the vehicle body side), so that arrangement of the wiring can be improved and reduction in length of the wiring can be achieved.

According to, the invention, the fifth aspect, since the vehicle body frame member includes the recessed portion that overlaps the connector portion, it is possible to bring the side stand, including the connector portion, closer to the vehicle body frame member. For this reason, surroundings of the side stand can be made compact, and grounding of the side stand can be easily avoided by moving the side stand upward.

According to the sixth aspect, since the unlock operation portion of the connector portion is disposed on the inner side of the connector portion in the vehicle width direction, it is possible to inhibit unauthorized access to the connector portion and to achieve improvement in appearance by adopting the arrangement in which the unlock operation portion is difficult to see from the outside in the vehicle width direction.

### [Brief Description of Drawings]

Fig. 1 is a left side view of a motorcycle according to an embodiment of the present invention.
Fig. 2 is a left side view around a side stand of the motorcycle.
Fig. 3 is a diagram of surroundings of the side stand from an outer side in a rotation shaft direction.
Fig. 4 is a diagram including a partial cross-section of the surroundings of the side stand viewed from a rear side in a longitudinal direction of the side stand.
Fig. 5 is a cross-sectional view along line V-V in Fig. 3.
Fig. 6 is a side view corresponding to Fig. 2 showing an arrangement of a rotational positioning portion and a connector portion.
Fig. 7 is a perspective view of the stand switch from an inner side in a vehicle width direction.

### [Description of Embodiments]

Hereinafter, embodiments of the present invention will be described with reference to the drawings. In addition, directions such as forward, rearward, leftward, and rightward in the following description are assumed to be the same as directions in a vehicle described below unless otherwise specified. Further, in appropriate places in figures used in the following description, an arrow FR indicating a forward direction in the vehicle, an arrow LH indicating a leftward direction in the vehicle, and an arrow UP indicating an upward direction in the vehicle are shown.

### <Whole vehicle>

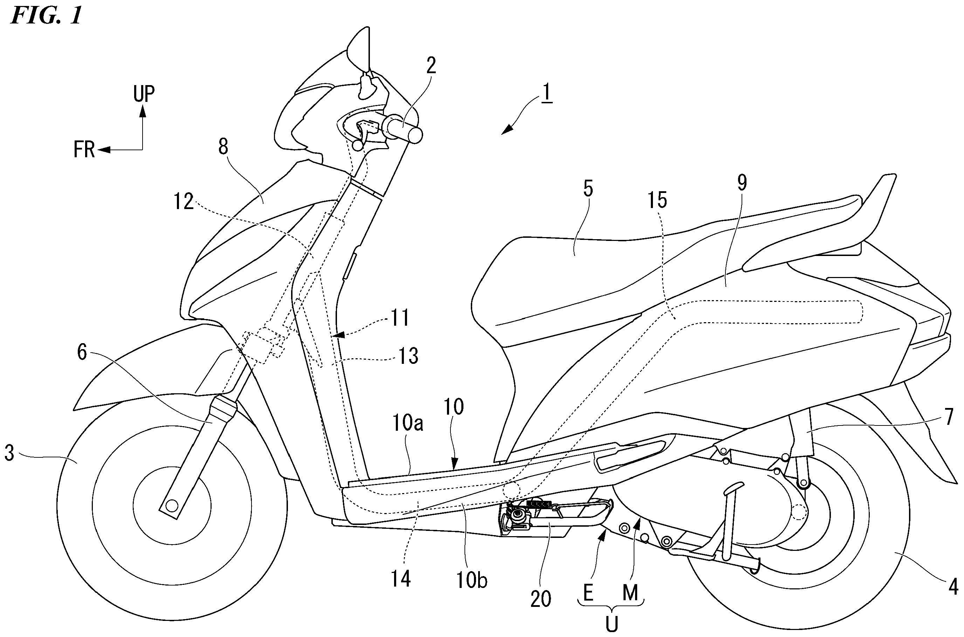

Fig. 1 shows a unit swing type motorcycle (a scooter type vehicle) 1 as an example of a saddle-riding type vehicle of the present embodiment. The motorcycle 1 includes a front wheel 3 serving as a steering wheel and a rear wheel 4 serving as a driving wheel. The front wheel 3 is supported by a pair of left and right front forks 6 and can be steered by a handlebar 2. The rear wheel 4 is supported by a swing unit (a power unit) U and can be driven by an engine E.

The swing unit U supports the rear wheel 4 serving as the driving wheel to be vertically swingable. The swing unit U integrally includes the engine (internal combustion engine) E serving as a drive source and, for example, a V-belt type continuously variable transmission M. The rear wheel 4 is supported on an output shaft of the continuously variable transmission M at a rear portion thereof. The rear portion of the continuously variable transmission M is supported by a vehicle body frame 11 via a rear cushion 7.

Steering system components including the handlebar 2, the left and right front forks 6 and the front wheel 3 are steerably supported by a head pipe 12 at a front end portion of the vehicle body frame 11. The swing unit U and the rear wheel 4 are supported by a pivot portion (not shown) at a lower portion of the vehicle body frame 11 to be vertically swingable via a suspension link or the like.

A front portion of the vehicle body is covered with a front cover 8, and a rear portion of the vehicle body is covered with a rear cover 9. A bottom floor portion 10 is provided between the front cover 8 and the rear cover 9. A step floor 10a on which a driver rests his or her feet is provided on an upper surface of the bottom floor portion 10. A seat 5 on which occupants including the driver are seated is supported on the rear cover 9. Reference numeral 10b in the figure indicates a pair of left and right floor side covers that wrap around and below left and right side edges of the step floor 10a.

The vehicle body frame 11 includes the head pipe 12 located at the front end portion, a down frame 13 extending downward from the head pipe 12, a pair of left and right lower frames 14 that bend rearward from a lower end portion of the down frame 13, and a pair of left and right rear frames 15 extending to appropriately bend upward and rearward from rear end portion of the lower frames 14. The pivot portion that supports a front end portion of the swing unit U is provided in the vicinity of the rear end portions of the left and right lower frames 14.

### <Side stand>

As shown in Fig. 1, a foldable type side stand 20 is attached to the left lower frame (vehicle body frame member) 14 of the vehicle body frame 11. The side stand 20 supports the vehicle body of the motorcycle 1 in an upright and leftwardly inclined state.

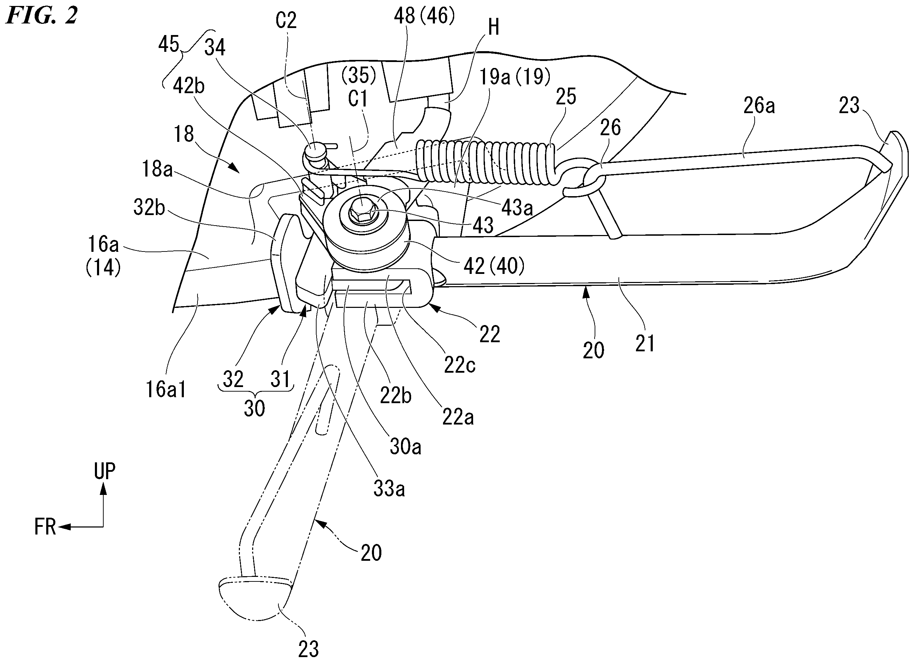

As shown in Figs. 2 to 5, the side stand 20 is rotatably supported by a stand bracket 30 fixed to the left lower frame 14. The side stand 20 is rotatable between a retracted position at which a tip side (grounding side) thereof is flipped up behind a rotation shaft 35 (which may be indicated by an axis C1 in the figure), and a usage position (standing position) in which the tip side is extended below the rotation shaft 35. In the figure, the side stand 20 at the usage position is shown by a chain line.

The side stand 20 integrally includes, for example, a stand bar 21 made of a straight steel pipe, a pivot portion 22 that is provided on one end side (a base end side or rotation shaft 35 side) of the stand bar 21 and is rotatably connected to the vehicle body side, and a grounding portion 23 that is provided on the other end side (the tip side or grounding side) of the stand bar 21 and forms a grounding surface for supporting the vehicle body.

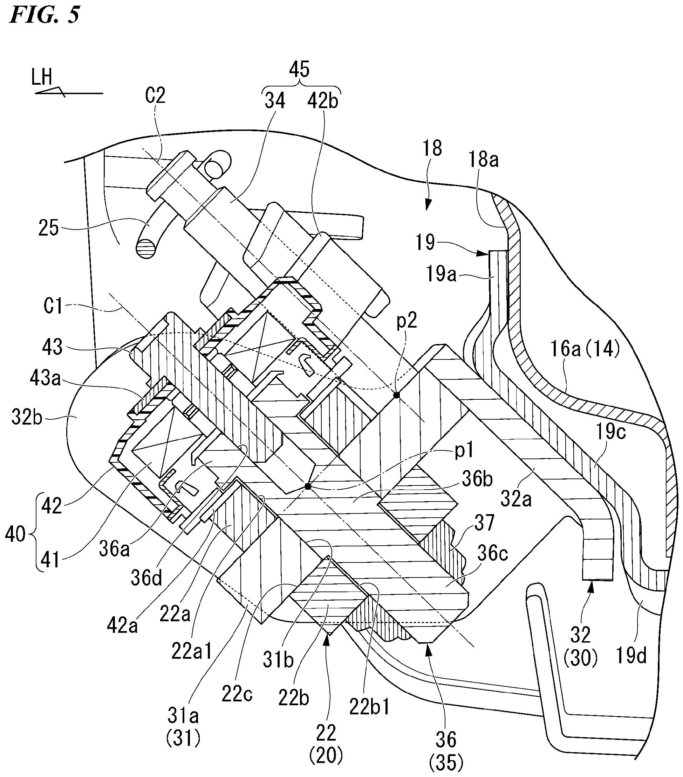

The pivot portion 22 has a bifurcated shape that sandwiches a flat plate-shaped stand connection portion 31a of the stand bracket 30 in a plate thickness direction. The pivot portion 22 includes a pair of two plate portions 22a and 22b. The plate portions 22a and 22b are provided parallel to each other at intervals in the plate thickness direction of the stand connection portion 31a. A groove portion 22c into which the stand connection portion 31a can be relatively rotatably inserted is formed between the plate portions 22a and 22b. Shaft insertion holes 22a1 and 22b 1 (see Fig. 5) through which the rotation shaft 35 is inserted are formed coaxially with each other in both plate portions 22a and 22b.

The side stand 20 inserts the stand connection portion 31a of the stand bracket 30 into the groove portion 22c of the pivot portion 22. In this state, the rotation shaft 35 penetrating the pivot portion 22 and the stand connection portion 31a is attached. As a result, the side stand 20 is rotatably connected to and supported by the stand bracket 30 via the rotation shaft 35.

The rotation shaft 35 is inclined upward such that a portion thereof on an outer side in the vehicle width direction is located on an upper side. As a result, when the side stand 20 is in the standing position, the side stand 20 is protruded outward in the vehicle width direction. Further, when the side stand 20 is in the retracted position, the side stand 20 is inhibited from protruding outward in the vehicle width direction. The side stand 20 in the standing position protruding outward in the vehicle width direction provides the following effects. That is, the grounding portion 23 is disposed on an outer side in the vehicle width direction to easily support the vehicle body of the motorcycle 1. By inhibiting the side stand 20 in the retracted position from protruding outward in the vehicle width direction, the following effects can be obtained. That is, the side stand 20 is less likely to be grounded when the vehicle body is banked. The rotation shaft 35 is also inclined in a longitudinal direction such that a portion thereof on the outer side in the vehicle width direction is located further forward. The line C1 in the figure indicates a central axis of the rotation shaft 35.

The side stand 20 and its peripheral components may be unintentionally grounded. This grounding occurs in a case in which the vehicle body is largely banked during cornering or in a case in which it passes over unevenness on a road surface. In order to inhibit the side stand 20 from being affected by a bank angle or the minimum ground clearance of the vehicle body, an attachment position of the side stand 20 is preferably located as high as possible.

A locking hook 26 for locking one end portion of a stand spring (tensile coil spring) 25 is provided on the tip side of the side stand 20. The locking hook 26 protrudes outward in the vehicle width direction from an intermediate portion of the stand bar 21 in a longitudinal direction thereof, and then bends toward the tip side of the stand bar 21. The locking hook 26 bends toward the tip side of the stand bar 21 and then extends linearly to the grounding portion 23, and a tip portion thereof is welded to the grounding portion 23. An extension portion of the locking hook 26 to the grounding portion 23 protrudes outward in the vehicle width direction on the tip side of the stand bar 21 to be a footrest portion 26a. The footrest portion 26a enables a rotation operation of the side stand 20 performed by a user's foot.

### <Stand attachment portion>

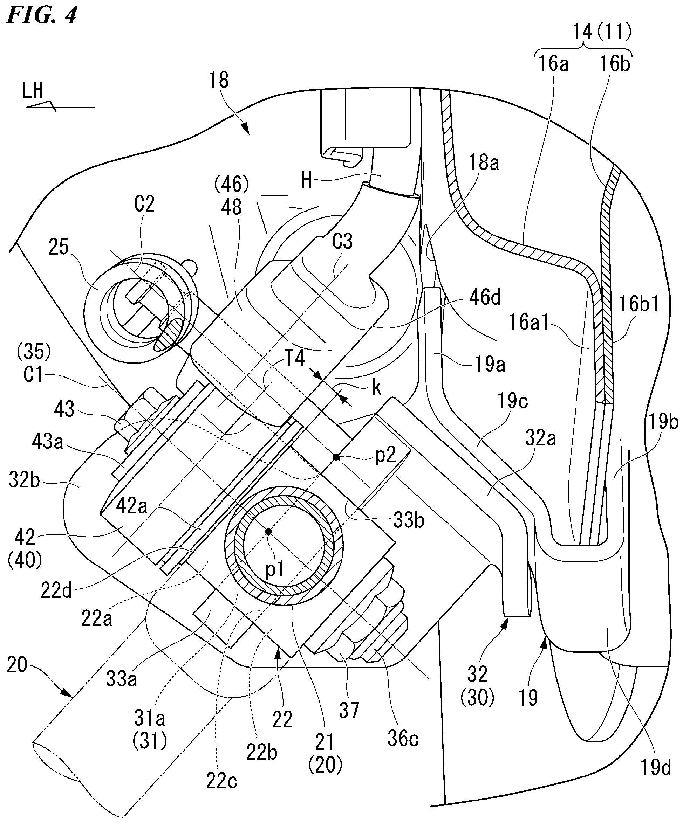

As shown in Fig. 4, at least the left lower frame 14 of the vehicle body frame 11 is a press frame. The press frame is formed by integrally combining a plurality of press frame bodies. The left lower frame 14 includes an outer frame body 16a on an outer side in the vehicle width direction and an inner frame body 16b on an inner side in the vehicle width direction. Both of the frame bodies 16a and 16b are formed by, for example, pressing a steel plate. Both of the frame bodies 16a and 16b join joining flanges 16a1 and 16b1 provided on outer peripheral portions thereof or the like by spot welding or the like. As a result, both of the frame bodies 16a and 16b form the left lower frame 14 having a closed cross-sectional structure.

The left lower frame 14 is provided with a stand attachment portion 18 for attaching the site stand. The stand attachment portion 18 includes a reinforcing bracket 19 welded and fixed to the left lower frame 14, and the stand bracket 30 welded and fixed to the reinforcing bracket 19. In the present embodiment, the reinforcing bracket 19 and the stand bracket 30 are included in the configuration of the vehicle body frame 11.

The reinforcing bracket 19 is formed to be bent in a substantially V shape when viewed in the longitudinal direction to straddle the left lower frame 14 from below. The reinforcing bracket 19 includes an outer plate portion 19a, an inner plate portion 19b, and an inclined plate portion 19c. The outer plate portion 19a is disposed along an outer surface of the left lower frame 14 in the vehicle width direction and is joined to the outer surface. The inner plate portion 19b is disposed along an inner side surface of the left lower frame 14 in the vehicle width direction and is joined to the inner side surface. The inclined plate portion 19c is inclined and extends below the outer plate portion 19a toward a lower end portion 19d of the bracket to be located inward in the vehicle width direction toward a lower side thereof.

The lower end portion 19d of the bracket has a U shape when viewed in the longitudinal direction. A lower end portion of the inner plate portion 19b is connected to an upper end portion of the lower end portion 19d of the bracket on an inner side thereof in the vehicle width direction. A lower end portion of the inclined plate portion 19c is connected to an upper end portion of the lower end portion 19d of the bracket on an outer side thereof in the vehicle width direction.

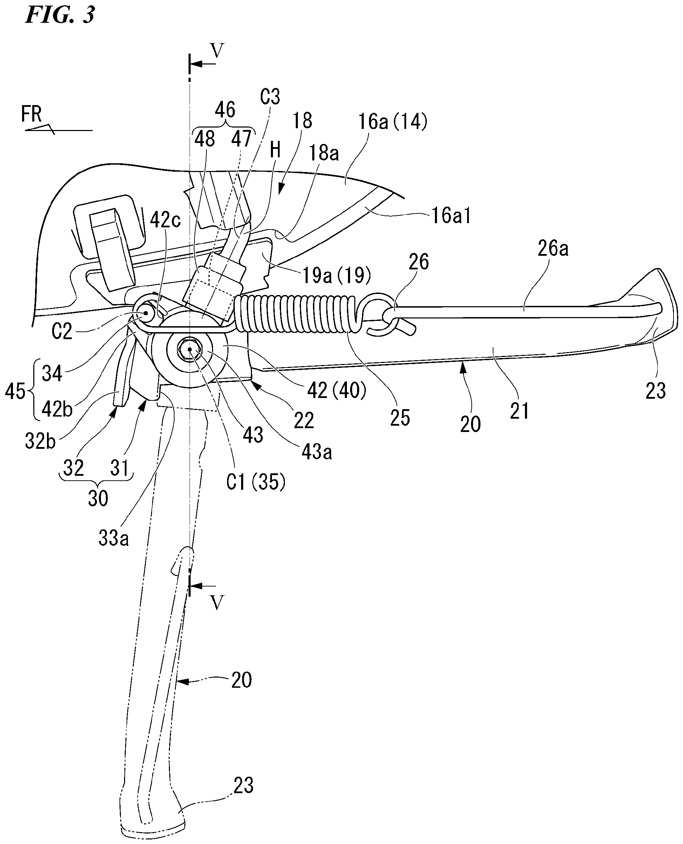

Also referring to Figs. 2 and 3, a portion of the left lower frame 14 to which the reinforcing bracket 19 is joined is a portion of the outer frame body 16a to which the outer plate portion 19a is joined. At this portion, a joggle (hereinafter, referred to as a recessed portion 18a) that changes the outer surface inward in the vehicle width direction is formed. The recessed portion 18a is located at a position overlapping a connector portion 46, which will be described later, in a side view of the vehicle. The recessed portion 18a is also an avoidance portion that avoids the inner side of the connector portion 46 in the vehicle width direction.

Referring to Figs. 4 and 5, the stand bracket 30 includes a bracket base 32 joined to the reinforcing bracket 19, and a connecting plate 31 that is joined to and held by the bracket base 32 to form the stand connection portion 31a.

The bracket base 32 includes a joint plate portion 32a and a front end plate portion 32b. The joint plate portion 32a bends along the outer surface in the vehicle width direction at each of the inclined plate portion 19c and the lower end portion 19d of the bracket of the reinforcing bracket 19. The front end plate portion 32b extends to bend downward in a direction orthogonal to the inclined plate portion 19c outward from a front end portion of the joint plate portion 32a outward in the vehicle width direction. The front end plate portion 32b extends outward in the vehicle width direction from a stand switch 40, which will be described later, and inhibits the influence of disturbance from an outer side in the vehicle width direction on surroundings of the stand switch 40.

The connecting plate 31 is disposed to be orthogonal to the inclined plate portion 19c. The connecting plate 31 is inclined to position both surfaces thereof in the plate thickness direction on a lower side toward the outer side in the vehicle width direction. The connecting plate 31 forms the stand connection portion 31a into which the pivot portion 22 of the side stand 20 is fitted. The connecting plate 31 is formed of a steel plate thicker than the bracket base 32. The bracket base 32 is made of a steel plate thicker than the reinforcing bracket 19. The reinforcing bracket 19 is made of a steel plate thicker than the outer frame body 16a and the inner frame body 16b.

Also, the stand attachment portion 18 is not limited to the above configuration. For example, the vehicle body frame 11 may be made of a steel pipe, the stand bracket 30 may be an integrally formed product, or the stand bracket 30 may be configured to be detachably fixed to the vehicle body frame 11 by bolt-fastening or the like.

The stand connection portion 31a forms a shaft insertion hole 31b (see Fig. 5) penetrating in the plate thickness direction at a substantially central portion thereof in a plan view. The shaft insertion hole 3 1b has the following arrangement in a state in which the connecting plate 31 is inserted into the groove portion 22c of the pivot portion 22. The shaft insertion hole 31b is coaxially disposed with the shaft insertion holes 22a1 and 22b1 provided in the pair of plate portions 22a and 22b of the pivot portion 22.

As shown in Fig. 5, the rotation shaft 35 is configured as a so-called stepped bolt 36. The stepped bolt 36 is removably inserted from an outer side in the vehicle width direction into the insertion holes 22a1, 22b1, and 31b of the pivot portion 22 and the stand connection portion 31a. The stepped bolt 36 includes a head portion 36a located on an outer side in the vehicle width direction, a shaft portion 36b connected to an inner side of the head portion 36a in the vehicle width direction, and a screw shaft 36c protruding inward in the vehicle width direction of the pivot portion 22.

The shaft insertion hole 22a1 of the plate portion 22a on an outer side of the pivot portion 22 in the vehicle width direction and the shaft insertion hole 3 1b of the stand connection portion 31a have the same diameter. The shaft portion 36b of the stepped bolt 36 can be inserted into each of the shaft insertion holes 22a1 and 31b. The shaft insertion hole 22b1 of the plate portion 22b on the inner side of the pivot portion 22 in the vehicle width direction is set to the following diameter. The shaft insertion hole 22b1 has a smaller diameter than each of the shaft insertion holes 22a1 and 3 1b of the plate portion 22a and the stand connection portion 31a on the outer side of the pivot portion 22 in the vehicle width direction. The screw shaft 36c of the stepped bolt 36 can be inserted into the shaft insertion hole 22b1, but cannot be inserted into the shaft portion 36b. A circumferential edge of the shaft insertion hole 22b1 on the outer side in the vehicle width direction (on the stand connection portion 31a side) is a seating surface that abuts a tip surface of the shaft portion 36b. The shaft portion 36b has a larger diameter than the screw shaft 36c.

When the side stand 20 is assembled, the shaft portion 36b of the stepped bolt 36 is inserted into the shaft insertion holes 22a1 and 31b of the plate portion 22a of the pivot portion 22 on the outer side in the vehicle width direction and the stand connection portion 31a. In this case, the shaft portion 36b causes the tip surface to abut a peripheral edge portion of the shaft insertion hole 22b1 of the plate portion 22b on the inner side in the vehicle width direction. In this state, a nut 37 is screwed and tightened to the screw shaft 36c protruding inward from the pivot portion 22 in the vehicle width direction. Thus, the stepped bolt 36 is fixed to the plate portion 22b on the inner side in the vehicle width direction. As a result, the pivot portion 22 is rotatably supported on and connected to the stand connection portion 31a via the stepped bolt 36.

Referring to Figs. 2 to 4, a stepped front lower stopper portion 33a that defines the standing position of the side stand 20 is formed at a front lower portion of the connecting plate 31. The front lower stopper portion 33a abuts one end side of the pivot portion 22 in a rotation direction thereof from behind to define the standing position of the side stand 20. A stepped rear upper stopper portion 33b that defines the retracted position of the side stand 20 is formed on a rear upper portion of the connecting plate 31. The rear upper stopper portion 33b abuts the other end side of the pivot portion 22 in the rotation direction from below to define the retracted position of the side stand 20.

A locking pin 34 for locking the other end portion of the stand spring (tensile coil spring) 25 is provided to protrude from a front upper portion of the connecting plate 31. The locking pin 34 is provided, for example, in parallel with the rotation shaft 35. The stand spring 25 is provided to stretch between the locking hook 26 of the side stand 20 and the locking pin 34 of the stand connection portion 31a. The stand spring 25 holds a rotational position of the side stand 20 in the standing position or the retracted position due to its own tension. A line C2 in the figure indicates a central axis of the locking pin 34.

### <Stand switch>

As shown in Figs. 2 to 5, the stand switch 40 for detecting the rotational position of the side stand 20 is provided on the outer side of the pivot portion 22 in the vehicle width direction.

The stand switch 40 is a rotary switch provided coaxially with the rotation shaft 35. The stand switch 40 detects whether the side stand 20 is in the usage position or the retracted position and outputs a corresponding electric signal. This electric signal is sent to an engine control unit (not shown) and used for various controls. This control is, for example, control for making it impossible to start the engine E when the side stand 20 is in the usage position while the engine E is stopped. Further, for example, the control is control for stopping the engine E when the side stand 20 rotates from the retracted position to the usage position while the engine E is in operation.

Referring to Fig. 5, the stand switch 40 includes a rotor 41 and a case 42. The rotor 41 is provided to be rotatable integrally with the side stand 20. The case 42 accommodates the rotor 41 and is provided to be rotatable relative to the side stand 20.

The rotor 41 is disposed on an outer side of the head portion 36a of the stepped bolt 36 in the vehicle width direction. A switch attachment bolt 43 coaxial with the stepped bolt 36 can be inserted into the rotor 41. The switch attachment bolt 43 penetrates the rotor 41 and is screwed and tightened to a screw hole 36d provided to protrude on the head portion 36a side of the stepped bolt 36. As a result, the rotor 41 can rotate integrally with the stepped bolt 36 and thus the side stand 20.

Also referring to Fig. 3, the case 42 has a circular shape when viewed in the axial direction of the rotation shaft 35. The case 42 has a cup shape that covers the rotor 41 from an outer side in the vehicle width direction. The case 42 is disposed close to the plate portion 22a on the outer side of the pivot portion 22 in the vehicle width direction via a thrust washer 42a or the like. In this state, detachment of the case 42 outward in the vehicle width direction is restricted by a large-diameter washer 43a used for a seating surface of the switch attachment bolt 43. As a result, the case 42 is attached to the outer side of the pivot portion 22 in the vehicle width direction.

The locking pin 34 for locking the stand spring 25 is located in front of and above the case 42. A locking claw portion 42b is provided to protrude from a front upper portion of the case 42 toward an outer peripheral side (outer side in a radial direction) of the case 42. The locking claw portion 42b forms a U-shaped locking groove 42c that opens to the outer peripheral side of the case 42. The locking pin 34 can be engaged into the locking groove 42c. The locking claw portion 42b and the locking pin 34 constitute a rotational positioning portion 45 that performs positioning of the case 42 in the rotation direction of the side stand 20.

Referring to Figs. 4 and 5, reference numerals p1 and p2 in the figure indicate the following intersection points. These intersection points are intersection points between the central axes C1 and C2 of the rotation shaft 35 and the locking pin 34 and the outer surface of the connecting plate 31 (a plane orthogonal to the rotation shaft 35) on the outer side in the vehicle width direction. For example, these intersection points are defined as axial centers p1 and p2 of the rotation shaft 35 and the locking pin 34.

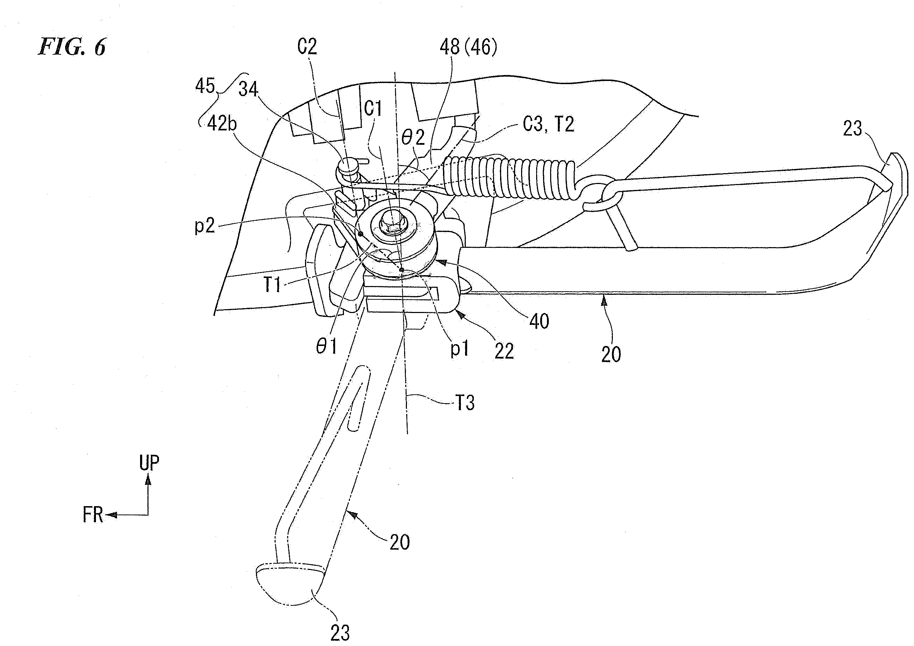

Referring to Fig. 6, a straight line connecting the axial center p1 of the rotation shaft 35 to the axial center p2 of the locking pin 34 in the side view of the vehicle is defined as a first straight line T1. The axial center p2 corresponds to a positioning center of the rotational positioning portion 45.

Referring to Figs. 2 and 3, the connector portion 46 is disposed on a rear upper side of the case 42. The connector portion 46 makes it possible to connect electric wiring (harness) H extending from the vehicle body side to the stand switch 40. The connector portion 46 includes a terminal portion 47 and a coupler 48. The terminal portion 47 is provided to protrude from a rear upper portion of the case 42 toward the outer peripheral side of the case 42. The coupler 48 is externally fitted by inserting the terminal portion 47 thereinto from the outer peripheral side of the case 42. Aline C3 in Fig. 3 indicates a central axis in an insertion and removal direction (wiring attachment and detachment direction) of the coupler 48 in the connector portion 46. The insertion and removal direction of the coupler 48 is a direction parallel to a plane orthogonal to the rotation shaft 35.

Referring to Fig. 6, a straight line along the central axis C3 in the side view of the vehicle is defined as a second straight line T2.

Referring to Figs. 2 and 6, in the side view of the vehicle, the rotational positioning portion 45 and the connector portion 46 are disposed with respect to the rotation shaft 35 of the side stand 20 as follows. That is, the rotational positioning portion 45 and the connector portion 46 are disposed to be distributed on front and rear side in the longitudinal direction of the vehicle. In the side view of the vehicle, the rotational positioning portion 45 is disposed in front of the rotation shaft 35. Further, the connector portion 46 is disposed behind the rotation shaft 35. The line T3 in Fig. 6 indicates a vertical line passing through the axial center p1 of the rotation shaft 35 in the side view of the vehicle.

In the side view of the vehicle, a straight line connecting the axial center p1 of the rotation shaft 35 to the positioning center p2 of the rotational positioning portion 45 is defined as the first straight line T1. The first straight line T1 extends diagonally from the rotation shaft 35 side to the rotational positioning portion 45 side toward a front upper side. In the side view of the vehicle, the straight line in the wiring attachment and detachment direction (central axis C3) of the connector portion 46 is defined as the second straight line T2. The second straight line T2 extends diagonally from the rotation shaft 35 side to the connector portion 46 side toward a rear upper side. In the side view of the vehicle, the first straight line T1 and the second straight line T2 are disposed in a V shape at a relative angle to intersect each other.

In the present embodiment, the rotational positioning portion 45 is disposed on the front side of the vehicle and the connector portion 46 is disposed on the rear side of the vehicle with reference to the rotation shaft 35 of the stand switch 40. That is, the rotational positioning portion 45 and the connector portion 46 of the stand switch 40 are dispersedly disposed in the longitudinal direction of the vehicle. This makes it possible to reduce a distance between the stand switch 40 and the vehicle body frame 11. Accordingly, surroundings of the side stand 20 can be made compact. Further, by bringing the side stand 20 closer to the vehicle body (displacing it upward), the following effects can be obtained. That is, when the vehicle body is banked, it becomes difficult for the side stand 20 to be grounded, and it becomes easy to secure the minimum ground clearance.

Further, in the present embodiment, in the side view of the vehicle, a rearward inclination angle θ2 of the second straight line T2 with respect to the vertical line T3 passing through the axial center p1 of the rotation shaft 35 is set as follows. That is, the inclination angle θ2 is set to be smaller than a forward inclination angle θ1 of the first straight line T1 with respect to the vertical line T3 (that is, to be more upright). This makes it easier to extend the wiring H extending from the connector portion 46 upward (toward the vehicle body side). Accordingly, arrangement of the wiring H can be improved and reduction in length of the wiring H can be achieved.

Also, referring to Fig. 4, in the present embodiment, in the axial direction of the rotation shaft 35, an inner side surface 46d of the connector portion 46 on the inner side in the vehicle width direction is located outward in the vehicle width direction from the outer side surface 22d of the pivot portion 22 on the outer side in the vehicle width direction. That is, the connector portion 46 is offset outward in the vehicle width direction with respect to the case 42 in the axial direction of the rotation shaft 35. In the axial direction of the rotation shaft 35, the central axis C3 of the connector portion 46 is offset outward in the vehicle width direction with respect to a height center of the case 42 (indicated by a line T4 in the figure). In the axial direction of the rotation shaft 35, the inner side surface 46d of the connector portion 46 on the inner side in the vehicle width direction is separated from the outer side surface 22d of the pivot portion 22 on the outer side in the vehicle width direction by an interval k outward in the vehicle width direction.

In the present embodiment, in the axial direction (rotation shaft direction) of the rotation shaft 35 of the side stand 20, the inner side surface 46d of the connector portion 46 on the inner side in the vehicle width direction is disposed outward in the vehicle width direction from the outer side surface 22d of the pivot portion 22 of the side stand 20 on the outer side in the vehicle width direction. As a result, when viewed from the rotation shaft direction, interference between the rotating pivot portion 22 and the connector portion 46 is avoided even if the connector portion 46 is in a position overlapping a rotation range of the pivot portion 22.

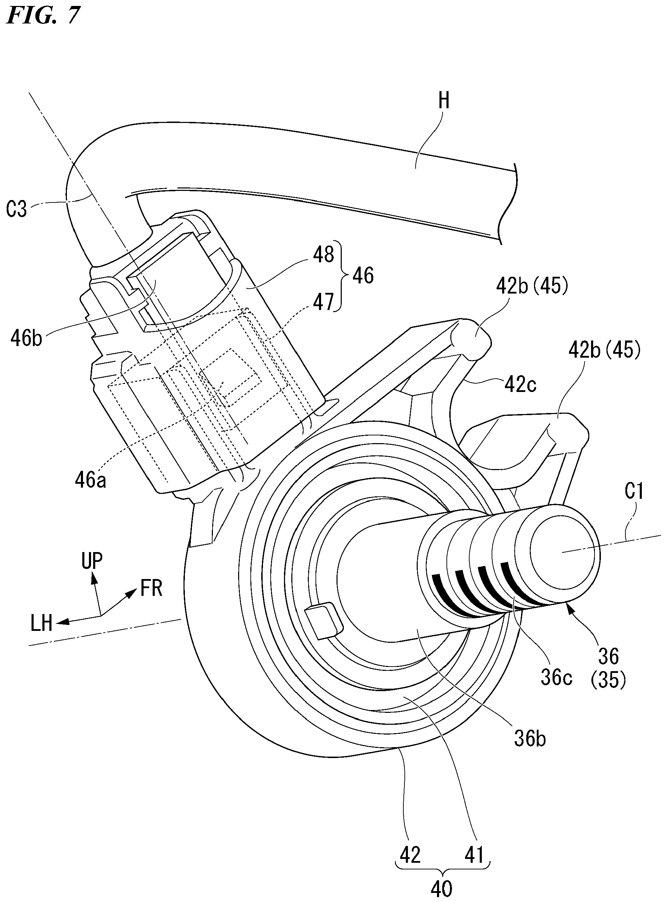

As shown in Fig. 7, the connector portion 46 of the stand switch 40 includes a lock portion 46a. The lock portion 46a restricts removal of the coupler 48 from the terminal portion 47 in a connected state in which the terminal portion 47 and the coupler 48 are fitted to each other. The connector portion 46 includes a unlock operation portion 46b that enables the coupler 48 to perform an unlock operation of the removal restriction of the lock portion 46a. The unlock operation portion 46b is disposed on the inner side of the connector portion 46 in the vehicle width direction.

As described above, the side stand structure in the above embodiment includes the side stand 20 rotatably supported by the vehicle body (vehicle body frame 11), the stand switch 40 configured to detect the rotational position of the side stand 20, the rotational positioning portion 45 configured to position the stand switch 40 in the rotation direction of the side stand 20, and the connector portion 46 configured to connect the wiring H to the stand switch 40. The rotational positioning portion 45 and the connector portion 46 are disposed to be distributed in front of and behind the rotation shaft 35 of the side stand 20 in the longitudinal direction of the vehicle.

According to this configuration, the rotational positioning portion 45 and the connector portion 46 of the side stand 20 are disposed to be distributed in front of and behind the rotation shaft 35 of the side stand 20 in the longitudinal direction of the vehicle, and thus the following effects are obtained. That is, as compared with a case in which both the rotational positioning portion 45 and the connector portion 46 protruding toward the outer peripheral side of the stand switch 40 are one-sidedly disposed on one side of the rotation shaft 35 in the longitudinal direction of the vehicle, the stand switch 40 can be disposed to be closer to the vehicle body in the vehicle width direction and the vertical direction. For this reason, surroundings of the side stand 20 can be made compact, and unintended grounding of the side stand 20 can be easily avoided by moving the side stand 20 upward.

Further, in the side stand structure, the rotational positioning portion 45 is disposed in front of the rotation shaft 35 of the side stand 20 and the connector portion 46 is disposed behind the rotation shaft 35 of the side stand 20.

According to this configuration, since the rotational positioning portion 45 is disposed in front of the rotation shaft 35, and the connector portion 46 is disposed behind the rotation shaft 35, the locking pin 34 or the like held by the rotational positioning portion 45 on the vehicle body side is disposed in front of the rotation shaft 35. Normally, the side stand 20 rotates between the usage position extending downward from the rotation shaft 35 and the retracted position extending rearward. For this reason, by disposing the rotational positioning portion 45 in front of the rotation shaft 35, the locking pin 34 or the like is retracted from the rotation range of the side stand 20. As a result, the rotational positioning portion 45 and the connector portion 46 can be disposed to be distributed in the longitudinal direction of the vehicle without obstructing the rotation range of the side stand 20. Further, since the connector portion 46 that is an electrical component is one-sidedly disposed rearward, it is possible to improve waterproofness and dust-proofness of the connector portion 46.

Also, in the side stand structure, the side stand 20 includes the pivot portion 22 rotatably connected to the vehicle body, and, in an axial direction of the rotation shaft 35, the inner side surface 46d of the connector portion 46 on the inner side in the vehicle width direction is disposed to be separated from the outer side surface 22d of the pivot portion 22 outward in the vehicle width direction.

According to this configuration, since the connector portion 46 is disposed to be separated from the pivot portion 22 outward in the vehicle width direction, it is possible to reliably prevent the side stand 20 and the connector portion 46 from interfering with each other when the side stand 20 rotates.

Also, in the side stand structure, in the side view of the vehicle, the rotational positioning portion 45 is disposed in front of and above the rotation shaft 35, the connector portion 46 is disposed above and behind the rotation shaft 35, the wiring H is attachable to and detachable from the connector portion 46 along the axis C3 that rises rearward in the side view of the vehicle, and when the straight line connecting the axial center p1 of the rotation shaft 35 to the axial center p2 of the locking pin 34 held by the rotational positioning portion 45 on the vehicle body side in the side view of the vehicle is defined as the first straight line T1 and the straight line along the axis C3 of the connector portion 46 in the side view of the vehicle is defined as the second straight line T2, the rearward inclination angle θ2 of the second straight line T2 with respect to the vertical line T3 passing through the axial center p1 of the rotation shaft 35 in the side view of the vehicle is set to be smaller than the forward inclination angle θ1 of the first straight line T1 with respect to the vertical line T3.

According to this configuration, since the rearward inclination angle θ2 of the second straight line T2 on the connector portion 46 side is set to be smaller than the forward inclination angle θ1 of the first straight line T1 on the rotational positioning portion 45 side (that is, more upright), the wiring H extending from the connector portion 46 can be easily extended upward (on the vehicle body side), so that arrangement of the wiring H can be improved and reduction in length of the wiring H can be achieved.

Also, in the side stand structure, the stand bracket 30 configured to rotatably support the side stand 20 and the lower frame 14 configured to fix the stand bracket 30 are provided on the vehicle body side, and the lower frame 14 includes the recessed portion 18a that overlaps at least a part of the connector portion 46 in the side view of the vehicle.

According to this configuration, since the lower frame 14 includes the recessed portion 18a that overlaps the connector portion 46, it is possible to bring the side stand 20, including the connector portion 46, closer to the lower frame 14. For this reason, surroundings of the side stand 20 can be made compact, and grounding of the side stand 20 can be easily avoided by moving the side stand 20 upward.

Also, in the side stand structure, the connector portion 46 includes the lock portion 46a configured to lock the connector portion 46 in a coupled state, and the unlock operation portion 46b configured to performs the unlock operation of the lock portion 46a, and the unlock operation portion 46b is disposed on the inner side of the connector portion 46 in the vehicle width direction.

According to this configuration, since the unlock operation portion 46b of the connector portion 46 is disposed on the inner side of the connector portion 46 in the vehicle width direction, it is possible to inhibit unauthorized access to the connector portion 46 and to achieve improvement in appearance by adopting the arrangement in which the unlock operation portion 46b is difficult to be seen from the outside in the vehicle width direction.

Vehicles to which the present invention is applied include all vehicles provided with a side stand. That is, not only motorcycles (including motorized bicycles and scooter type vehicles), but also three-wheeled vehicles (including front two-wheeled and rear one-wheeled vehicles in addition to front one-wheeled and rear two-wheeled vehicles), four-wheeled vehicles, and vehicles including an electric motor as a prime mover are also included.

### [Reference Signs List]

1 Motorcycle (saddle-riding type vehicle)
11 Vehicle body frame (vehicle body)
14 Lower frame (vehicle body frame member)
18 Stand attachment portion
18a Recessed portion
20 Side stand
22 Pivot portion
22d Outer side surface
30 Stand bracket
34 Locking pin (positioning pin)
P2 Axial center, positioning center
35 Rotation shaft
P1 Axial center
40 Stand switch
45 Rotational positioning portion
46 Connector portion
46a Lock portion
46b Unlock operation portion
46d Inner side surface
H Wiring
C3 Axis
T1 First straight line
θ1 Inclination angle
T2 Second straight line
θ2 Inclination angle
T3 Vertical line

## Claims

1. A saddle-riding type vehicle comprising:
a vehicle body frame member (14); and a side stand structure comprising a side stand (20) rotatably supported by the vehicle body frame member (14),
wherein the side stand (20) includes
a stand switch (40) configured to detect a rotational position of the side stand (20) and the stand switch (40) also includes a rotor (41) and a case (42),
a rotational positioning portion (45) constituted by a locking claw portion (42b) forming a U-shaped locking groove (42c) and a locking pin (34) capable of being engaged into the locking groove (42c) and configured to position the case (42) of the stand switch (40) in a rotation direction of the side stand (20), and the locking pin (34) for locking a stand spring (25) is located in front and above the case (42) and the locking claw portion (42b) is provided; to protrude from a front upper portion of the case (42) toward an outer peripheral side of the case (42),
a connector portion (46) configured to connect wiring (H) to the stand switch (40),
when a straight line connecting an axial center (p1) of a rotation shaft (35) of the side stand (20) to an axial center (p2) of the locking pin (34) held by the rotational positioning portion (45) on the vehicle body frame member (14) side in a side view of a vehicle is defined as a first straight line (T1), the first straight line (T1) extends from the rotation shaft (35) side to the rotational positioning portion (45) side in one of forward and rearward directions of a longitudinal direction of the vehicle,
when a straight line along an axis (C3) of the connector portion (46) in a wiring attachment and detachment direction of the connector portion (46) in the side view of the vehicle is defined as a second straight line (T2), the second straight line (T2) extends from the rotation shaft (35) side to the connector portion (46) side in the other of the forward and rearward directions of the longitudinal direction of the vehicle,
a stand bracket (30) configured to rotatably support the side stand (20) is fixed on an outer side of the vehicle body frame member (14) in a vehicle width direction, and
wherein in the side view of the vehicle, the rotational positioning portion (45) is disposed in front of and above the rotation shaft (35), and the connector portion (46) is disposed above and behind the rotation shaft (35), **characterized in that**
the vehicle body frame member (14) includes a recessed portion (18a) that overlaps at least a part of the connector portion (46) in the side view of the vehicle,
the wiring (H) is attachable to and detachable from the connector portion (46) along an axis (C3) that rises rearward, and
a rearward inclination angle (θ2) of the second straight line (T2) with respect to a vertical line (T3) passing through the axial center (p1) of the rotation shaft (35) in the side view of the vehicle is set to be smaller than a forward inclination angle (θ1) of the first straight line (T1) with respect to the vertical line (T3).

2. The vehicle according to claim 1,
wherein the first straight line (T1) in the side view of the vehicle extends from the rotation shaft (35) side to the rotational positioning portion (45) side in the forward direction of the longitudinal direction of the vehicle, and
the second straight line (T2) in the side view of the vehicle extends from the rotation shaft (35) side to the connector portion (46) side in the rearward direction of the longitudinal direction of the vehicle.

3. The vehicle according to claim 2,
wherein the side stand (20) includes a pivot portion (22) rotatably connected to the vehicle body frame member (14), and
in an axial direction of the rotation shaft (35), an inner side surface (46d) of the connector portion (46) on an inner side in a vehicle width direction is disposed to be separated outward in the vehicle width direction from an outer side surface (22d) of the pivot portion (22) on an outer side in the vehicle width direction.

## Patentansprüche

1. Sattelaufsitzfahrzeug, welches aufweist:
ein Fahrzeugrumpfrahmenelement (14) sowie eine Seitenständerstruktur, die einen Seitenständer (20) aufweist, der an dem Fahrzeugrumpfrahmenelement (14) drehbar gelagert ist, wobei der Seitenständer (20) enthält:
einen Ständerschalter (40), der konfiguriert ist, um eine Drehposition des Seitenständers (20) zu detektieren, und der Ständerschalter (40) auch einen Rotor (41) und ein Gehäuse (42) enthält,
einen Drehpositionierungsabschnitt (45), der durch einen Sperrklauenabschnitt (42b), der eine U-förmige Sperrnut (42c) bildet, und einen Sperrstift (34), der in die Sperrnut (42c) in Eingriff bringbar ist, aufgebaut und konfiguriert ist, um das Gehäuse (42) des Ständerschalters (40) in einer Drehrichtung des Seitenständers (20) zu positionieren, und der Sperrstift (34) zum Sperren einer Ständerfeder (25) vor und über dem Gehäuse (42) angeordnet ist und der Sperrklauenabschnitt (42b) so vorgesehen ist, dass er von einem vorderen oberen Abschnitt des Gehäuses (42) zu einer Außenumfangsseite des Gehäuses (42) hin vorsteht,
einen Steckerabschnitt (46), der konfiguriert ist, um ein Kabel (H) mit dem Ständerschalter (40) zu verbinden,
wenn eine gerade Linie, die eine axiale Mitte (p1) einer Drehwelle (35) des Seitenständers (20) mit einer axialen Mitte (p2) des Sperrstifts (34) verbindet, der durch den Drehpositionierungsabschnitt (45) an der Fahrzeugrumpfrahmenelement (14)-Seite gehalten wird, in Seitenansicht eines Fahrzeugs als eine erste gerade Linie (T1) definiert wird, sich die erste gerade Linie (T1) von der Drehwellen (35)-Seite zu der Drehpositionierungsabschnitt (45)-Seite einer von Vorwärts- und Rückwärtsrichtungen einer Längsrichtung des Fahrzeugs erstreckt,
wenn eine gerade Linie entlang einer Achse (C3) des Steckerabschnitts (46) in einer Kabelanbringe- und Löserichtung des Steckerabschnitts (46), in Seitenansicht des Fahrzeugs, als zweite gerade Linie (T2) definiert wird, sich die zweite gerade Linie (T2) von der Drehwellen (35)-Seite zu der Steckerabschnitt (46)-Seite in der anderen der Vorwärts- und Rückwärtsrichtungen der Längsrichtung des Fahrzeugs erstreckt,
ein Ständerträger (30), der konfiguriert ist, um den Seitenständer (20) drehbar zu lagern, an einer Außenseite des Fahrzeugrumpfrahmenelements (14) in Fahrzeugbreitenrichtung befestigt ist, und wobei in der Seitenansicht des Fahrzeugs der Drehpositionierungsabschnitt (45) vor und über der Drehwelle (35) angeordnet ist, und der Steckerabschnitt (46) über und hinter der Drehwelle (35) angeordnet ist, **dadurch gekennzeichnet, dass**
das Fahrzeugrumpfrahmenelement (14) einen vertieften Abschnitt (18a) enthält, der zumindest ein Teil des Steckerabschnitts (46) in Seitenansicht des Fahrzeugs überlappt,
das Kabel (H) an dem Steckerabschnitt (46) entlang einer nach hinten hochsteigenden Achse (C3) anbringbar und davon abnehmbar ist, und
ein rückwärtiger Neigungswinkel (θ2) der zweiten geraden Linie (T2) in Bezug auf eine vertikale Linie (T3), die durch die axiale Mitte (p1) der Drehwelle (35) in der Seitenansicht des Fahrzeugs hindurchgeht, kleiner gemacht ist als ein vorwärtiger Neigungswinkel (θ1) der ersten geraden Linie (T1) in Bezug auf die vertikale Linie (T3).

2. Das Fahrzeug nach Anspruch 1,
wobei die erste gerade Linie (T1) in der Seitenansicht des Fahrzeugs sich von der Drehwellen (35)-Seite zu der Drehpositionierungsabschnitt (45)-Seite in der vorwärtigen Richtung der Längsrichtung des Fahrzeugs erstreckt, und
sich die zweite gerade Linie (T2) in der Seitenansicht des Fahrzeugs von der Drehwellen (35)-Seite zu der Steckerabschnitt (46)-Seite in der rückwärtigen Richtung der Längsrichtung des Fahrzeugs erstreckt.

3. Das Fahrzeug nach Anspruch 2,
wobei der Seitenständer (20) einen Schwenkabschnitt (22) enthält, der mit dem Fahrzeugrumpfrahmenelement (14) drehbar verbunden ist, und
in axialer Richtung der Drehwelle (35), eine Innenfläche (46d) des Steckerabschnitts (46) an einer Innenseite in Fahrzeugbreitenrichtung, in der Fahrzeugbreitenrichtung von einer Außenfläche (22d) des Schwenkabschnitts (22) an einer Außenseite in der Fahrzeugbreitenrichtung auswärts getrennt angeordnet ist.

## Revendications

1. Véhicule de type à conduite sur selle comprenant :
un élément de cadre de corps de véhicule (14) ; et une structure de support latéral comprenant
un support latéral (20) supporté en rotation par l'élément de cadre de corps de véhicule (14),
dans lequel le support latéral (20) comporte
un commutateur de support (40) configuré pour détecter une position de rotation du support latéral (20) et le commutateur de support (40) comporte également un rotor (41) et un boîtier (42),
une partie de positionnement rotatif (45) constituée par une partie de griffe de verrouillage (42b) formant une rainure de verrouillage (42c) en forme de U et une goupille de verrouillage (34) apte à être insérée dans la rainure de verrouillage (42c) et configurée pour positionner le boîtier (42) du commutateur de support (40) dans une direction de rotation du support latéral (20), et la goupille de verrouillage (34) pour verrouiller un ressort de support (25) est située devant et au-dessus du boîtier (42) et la partie de griffe de verrouillage (42b) est prévue pour faire saillie d'une partie supérieure avant du boîtier (42) vers un côté périphérique extérieur du boîtier (42),
une partie connecteur (46) configurée pour connecter un câblage (H) au commutateur de support (40),
lorsqu'une ligne droite reliant un centre axial (p1) d'un arbre de rotation (35) du support latéral (20) à un centre axial (p2) de la goupille de verrouillage (34) maintenue par la partie de positionnement rotatif (45) sur le côté élément de cadre de corps de véhicule (14) dans une vue latérale d'un véhicule est définie comme une première ligne droite (T1), la première ligne droite (T1) s'étend à partir du côté arbre de rotation (35) vers le côté partie de positionnement rotatif (45) dans une des directions avant et arrière d'une direction longitudinale du véhicule,
lorsqu'une ligne droite le long d'un axe (C3) de la partie connecteur (46) dans une direction de fixation et de détachement de câblage de la partie connecteur (46) dans la vue latérale du véhicule est définie comme une deuxième ligne droite (T2), la deuxième ligne droite (T2) s'étend à partir du côté arbre de rotation (35) vers le côté partie connecteur (46) dans l'autre des directions avant et arrière de la direction longitudinale du véhicule,
une console de support (30) configurée pour supporter en rotation le support latéral (20) est fixée sur un côté extérieur de l'élément de cadre de corps de véhicule (14) dans une direction de largeur de véhicule, et
dans lequel dans la vue latérale du véhicule, la partie de positionnement rotatif (45) est disposée devant et au-dessus de l'arbre de rotation (35), et la partie connecteur (46) est disposée au-dessus de et derrière l'arbre de rotation (35), **caractérisé en ce que**
l'élément de cadre de corps de véhicule (14) comporte une partie évidée (18a) qui chevauche au moins une partie de la partie connecteur (46) dans la vue latérale du véhicule,
le câblage (H) peut être fixé à et peut être détaché de la partie connecteur (46) le long d'un axe (C3) qui s'élève vers l'arrière, et
un angle d'inclinaison vers l'arrière (θ2) de la deuxième ligne droite (T2) par rapport à une ligne verticale (T3) passant par le centre axial (p1) de l'arbre de rotation (35) dans la vue latérale du véhicule est réglé pour être inférieur à un angle d'inclinaison vers l'avant (θ1) de la première ligne droite (T1) par rapport à la ligne verticale (T3).

2. Véhicule selon la revendication 1,
dans lequel la première ligne droite (T1) dans la vue latérale du véhicule s'étend à partir du côté arbre de rotation (35) vers le côté partie de positionnement rotatif (45) dans la direction avant de la direction longitudinale du véhicule, et
la deuxième ligne droite (T2) dans la vue latérale du véhicule s'étend à partir du côté arbre de rotation (35) vers le côté partie connecteur (46) dans la direction vers l'arrière de la direction longitudinale du véhicule.

3. Véhicule selon la revendication 2,
dans lequel le support latéral (20) comporte une partie pivot (22) reliée en rotation à l'élément de cadre de corps de véhicule (14), et
dans une direction axiale de l'arbre de rotation (35), une surface latérale intérieure (46d) de la partie connecteur (46) sur un côté intérieur dans une direction de largeur de véhicule est disposée pour être séparée vers l'extérieur dans la direction de largeur de véhicule d'une surface latérale extérieure (22d) de la partie pivot (22) sur un côté extérieur dans la direction de largeur de véhicule.
